# FASCICULE DE BREVET EUROPEEN

(11) **EP 2 106 681 B1**
(45) Date de publication et mention de la délivrance du brevet: **15.02.2012**
(21) Numéro de dépôt: 09156305.6
(22) Date de dépôt: 26.03.2009
(51) Int. Cl.: A01B 63/22, A01B 73/02

(54) **Machine agricole avec un chariot perfectionné**
Landwirtschaftliche Maschine mit einem verbesserten Fahrwerk
Agricultural machine with an improved frame

(30) Priorité: 31.03.2008 FR 0852068
(43) Date de publication de la demande: 07.10.2009
(73) Titulaire: Kuhn-Huard S.A., 44142 Chateaubriant Cedex (FR)
(72) Inventeur: Gentilhomme, Guy, 44110, LOUISFERT (FR); Hurel, Cédric, 44110, ERBRAY (FR)
(74) Mandataire: Andres, Jean-Claude

(56) Documents cités:
- DE-A1-102006 019 032
- US-A- 3 193 023
- US-A- 4 425 971
- US-A- 4 712 622

## Description

La présente invention se rapporte au domaine technique général du machinisme agricole et en particulier au domaine du travail du sol. L'invention concerne une machine agricole de travail du sol pour la préparation de lits de semence notamment pour le déchaumage. L'invention concerne une machine agricole, par exemple un déchaumeur, munie d'un châssis comportant des trains d'outils et un chariot équipé de roues.

De telles machines connues présentent un châssis lié à l'attelage arrière d'un tracteur au moyen d'un timon, des trains d'outils et un chariot équipé de roues. Le chariot est relié au châssis de façon réglable en hauteur. Les roues servent au réglage de la profondeur de travail et au transport sur route. La plupart des déchaumeurs du type pulvériseur présente quatre trains de disques, respectivement deux à l'avant et deux à l'arrière, montés articulés sur le châssis via des axes de rotation verticaux. Ces trains de disques sont déplaçables par rapport au châssis entre une position de transport et au moins une position de travail. Lorsque les trains de disques sont déployés, le pulvériseur travaille une bande de terre relativement large alors que pour le déplacement sur routes, l'encombrement est réduit pour que la largeur de transport respecte la réglementation en vigueur. La disposition du chariot entre les trains avant et arrière apporte un équilibre au pulvériseur tant au travail qu'au transport.

Dans certains cas, un rouleau d'appui pour égaliser et rappuyer le sol est monté à l'arrière du châssis. L'utilisation d'un rouleau d'appui permet d'améliorer le contact entre les graines, la terre et l'humidité, ce qui favorise la germination des graines. Le montage du rouleau entraîne une surcharge à l'arrière du châssis et donc un déséquilibre du pulvériseur. Lors du travail, les trains d'outils avant ont tendance à sortir du sol alors que les trains arrière s'enfoncent dans le sol. On constate également une perte de capacité de traction pour le tracteur car l'essieu arrière est déchargé. Pour améliorer la répartition des charges et la qualité de travail du pulvériseur, la partie avant du pulvériseur est lestée avec une masse supplémentaire. Pour supporter cette masse supplémentaire, les dimensions et les sections du châssis sont augmentées. Le poids du pulvériseur est donc plus élevé ce qui entraîne aussi une consommation de carburant plus importante pour le tracteur. De même lors du transport, on constate un problème de stabilité lié au déséquilibre causé par le rouleau. Ce déséquilibre à l'arrière est surmonté par l'ajout de masse à l'avant du pulvériseur. De cette manière, la législation imposant une charge d'appui positive sur l'attelage du tracteur est respectée.

Le document US 4 425 971 se rapporte à une machine agricole avec un châssis composé d'une partie centrale et de deux parties latérales, chacune des parties portent des outils de travail. La partie centrale s'appuie au sol via un chariot avec des roues. Les roues sont placées au milieu des outils de travail de la partie centrale.

La présente invention a pour but de remédier aux inconvénients précités en proposant une machine équilibrée et stable, dont la répartition du poids est optimale sans l'utilisation d'une masse supplémentaire.

A cet effet, une importante caractéristique de l'invention consiste en ce que ledit chariot passe d'une position intermédiaire disposée entre lesdits trains d'outils correspondant à une première configuration de travail, à une position arrière disposée à l'arrière desdits trains d'outils correspondant à une deuxième configuration de travail compte tenu de la direction d'avance, et inversement. De cette manière, il est aisé d'obtenir une machine présentant une stabilité améliorée et réalisant un travail de qualité. La machine de l'invention offre donc un bon rapport entre ses performances et son poids.

Avec cette machine de l'invention, la charge d'appui sur l'attelage arrière du tracteur est suffisant quelle que soit la configuration, intermédiaire ou arrière du chariot. Le poids de la machine n'est pas augmenté.

D'autres caractéristiques et avantages de l'invention se dégageront des revendications et de la description qui vont suivre des exemples de réalisation non limitatifs de l'invention avec référence aux dessins annexés dans lesquels :
- la **figure 1** représente une vue de dessus en travail, dans une première configuration, d'une machine agricole selon l'invention,
- la **figure 2** représente une vue de dessus en travail, dans une deuxième configuration, d'une machine agricole selon l'invention,
- les **figures 3 et 4** représentent selon une vue de dessus en transport de la machine de la figure 1 respectivement de la figure 2,
- les **figures 5 et 6** représentent selon une vue latérale en transport de la machine de la figure 1 respectivement de la figure 2,
- les **figures 7 et 8** représentent selon une vue latérale un autre exemple de réalisation d'une machine dans une première et une deuxième configurations.

A titre d'illustration, la présente invention sera décrite en référence à un pulvériseur agricole, mais elle s'applique de façon générale aux machines agricoles telles que des machines de travail du sol pour la préparation de lits de semence ou pour le déchaumage. La machine agricole conforme à l'invention est un pulvériseur (1). Comme représenté sur les figures, le pulvériseur (1) comporte un châssis (2) prolongé par un timon (3) destiné à être lié à l'attelage arrière d'un tracteur (non représenté). Le pulvériseur (1) est déplacé, au travail et au transport, par le tracteur suivant une direction et un sens d'avance indiqué par la flèche (A). Dans la suite de la description, les notions suivantes "avant" et "arrière", "devant" et "derrière" sont définies par rapport au sens d'avance (A), et les notions "droite" et "gauche" sont définies en regardant le pulvériseur de l'arrière dans le sens d'avance (A). Le châssis (2) comporte des trains d'outils (4, 5) composés notamment d'au moins un train d'outils avant (4) et d'au moins un train d'outils arrière (5).

Le châssis (2) comporte aussi un chariot (6) équipé de roues (7). Le chariot (6) est lié au châssis (2) de façon réglable en hauteur par rapport à ce dernier. Les roues (7) assurent le transport ainsi que le contrôle de la profondeur de travail via un vérin hydraulique. Lorsque le vérin hydraulique est en extension maximale, l'écartement entre le sol et les trains d'outils est maximal. Ceci correspond à la position de transport. Lorsque la longueur du vérin hydraulique est réduite, les roues (7) se rapprochent du châssis (2) de façon suffisante pour permettre aux trains d'outils (4, 5) en position de travail, de reposer sur le sol. Le déplacement du pulvériseur (1) dans le sens d'avance (A) provoquera alors la pénétration partielle des trains d'outils (4, 5) dans le sol.

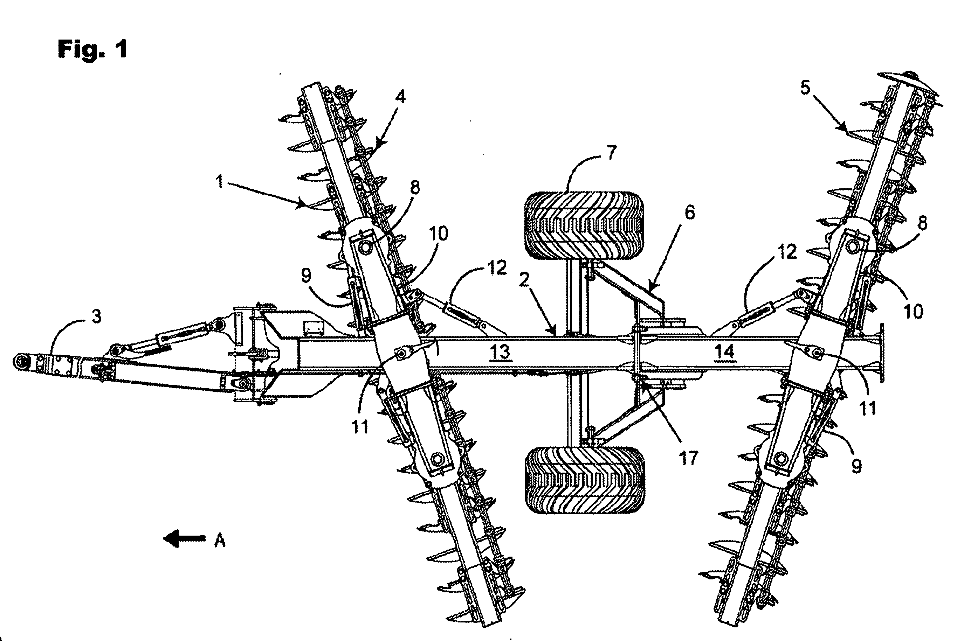

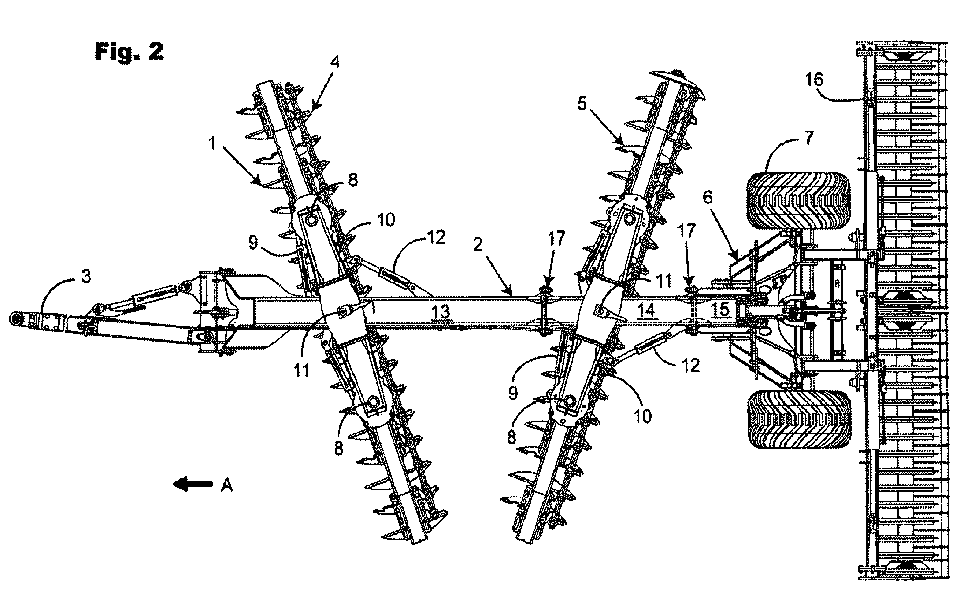

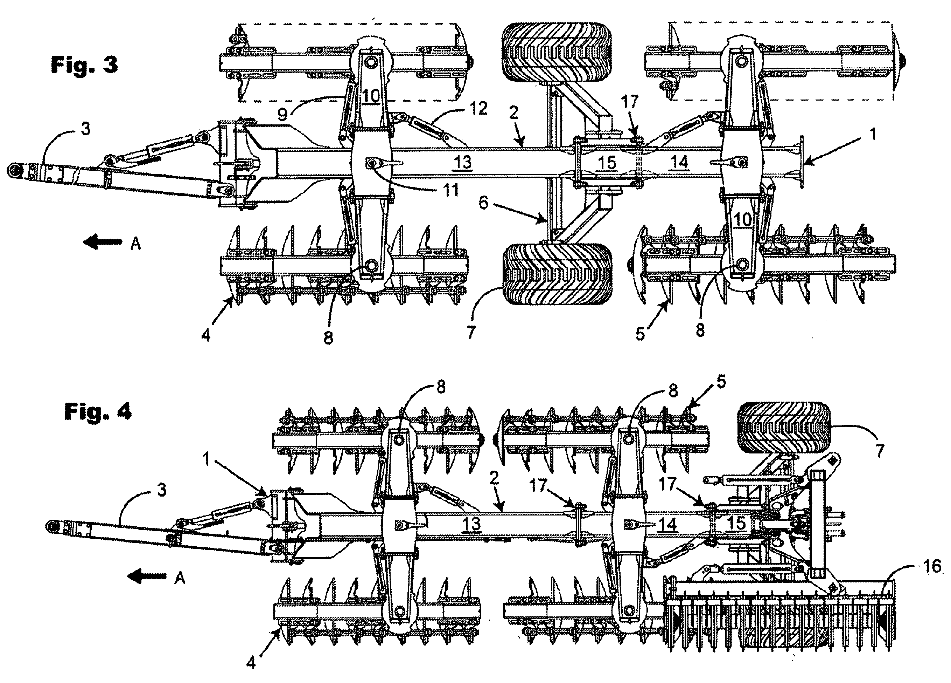

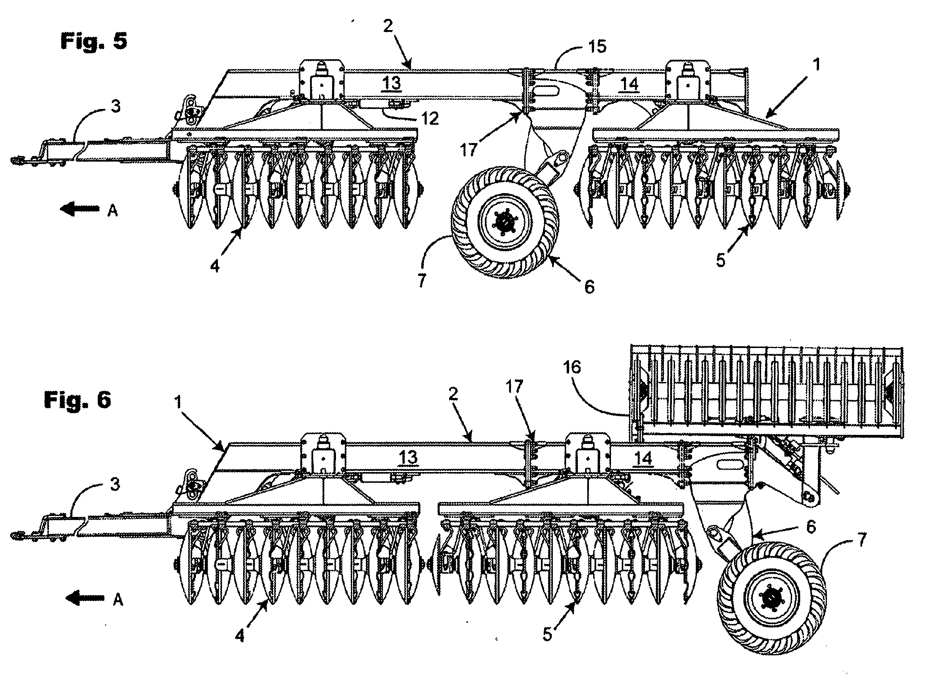

Les figures 1 et 2 représentent la machine agricole en position de travail. Les trains d'outils (4, 5) sont déployés. Le châssis (2) comporte quatre trains d'outils, respectivement, deux à l'arrière (5) et deux à l'avant (4). Les trains d'outils (4, 5) sont articulés sur le châssis (2) suivant des articulations latérales (8) d'axe sensiblement vertical. Ils sont suspendus par leur axe au châssis (2) de manière à permettre un pivotement dans un plan horizontal des trains d'outils (4, 5). Les moyens de pivotement (9) prévus à cet effet, permettent de déplacer les trains d'outils (4, 5) entre une position de transport et au moins une position de travail, et inversement. Chaque moyen de pivotement (9) s'étend sensiblement entre la partie médiane du train d'outils (4, 5) respectif et le châssis (2). Ceci permet à la machine de couvrir une bande de terre relativement large en position de travail, tout en respectant une largeur maximale bien inférieure à ladite bande pour le transport sur route. Les trains d'outils (4, 5) sont avantageusement des batteries de disques qui sont destinées à réaliser un mélange terre/paille qui favorise la dégradation des résidus de récolte et à créer un sol favorable à la germination des graines non récoltées et des graines d'adventices. Les figures 3 à 6 représentent la machine en position repliée de transport ou de circulation sur la route. Dans cette position, les trains d'outils (4, 5) sont sensiblement alignés avec le châssis (2) et le timon (3), c'est-à-dire suivant la direction d'avance (A).

En déchaumage les trains d'outils (4, 5) ont un certain angle d'attaque permettant un bon brassage de la terre afin de mélanger les résidus de récolte. On connaît deux familles de pulvériseur : ceux dont les trains d'outils forment sensiblement un "V" et ceux dont les trains d'outils forment sensiblement un "X". Dans l'exemple représenté, les trains d'outils (4, 5) forment un "V". Les trains d'outils (4, 5) sont montés sur le châssis (2) via un bras (10) respectif. Chaque bras (10) est articulé, dans sa partie centrale, sur le châssis (2) au moyen d'une articulation centrale (11) d'axe de pivotement dirigé vers le haut. La position angulaire des bras (10) par rapport au châssis (2) peut être modifiée en faisant pivoter les bras (10) autour de l'articulation centrale (11) respectif. La mise dans la position angulaire souhaitée et le maintien dans cette position sont réalisés à l'aide d'un moyen de manoeuvre (12) implanté entre le bras (10) et le châssis (2). La position angulaire des trains d'outils (4, 5) par rapport aux bras (10) correspondants peut être modifiée en faisant pivoter les trains d'outils (4, 5) autour des articulations latérales (8) respectifs. La mise dans la position angulaire souhaitée et le maintien dans cette position sont réalisés à l'aide des moyens de pivotement (9) respectifs. Le moyen de pivotement (9) permet de pivoter les trains d'outils (4, 5) d'une position de travail (figures 1 et 2) dans laquelle les trains d'outils (4, 5) s'étendent longitudinalement dans le prolongement les uns des autres dans une position de transport (figures 3 à 6) dans laquelle les trains d'outils (4, 5) s'étendent au moins sensiblement perpendiculairement au bras (10) respectif. Le moyen de pivotement (9) et le moyen de manoeuvre (12) sont par exemple des vérins hydrauliques.

Compte tenu du fait que les trains d'outils (4, 5) s'étendent obliquement par rapport à la direction d'avance (A), il peut arriver que le pulvériseur (1) ait tendance à dévier de la direction d'avance (A). L'utilisateur peut, pour y remédier, agir sur le timon (3) au moyen d'un vérin afin de maintenir le châssis (2) dans la direction d'avance (A). Le timon (3) est prévu télescopique pour s'adapter à l'augmentation de longueur du pulvériseur en position de transport du fait de l'orientation longitudinale des trains à l'avant et à l'arrière.

Selon une importante caractéristique de l'invention, le chariot (6) passe d'une position intermédiaire disposée entre lesdits trains d'outils (4, 5) à une position arrière disposée à l'arrière desdits trains d'outils (4, 5) compte tenu de la direction d'avance (A), et inversement. Ainsi quelle que soit la configuration de la machine, cette dernière est stable autant au travail qu'au transport. La charge d'appui, au niveau de l'attelage du tracteur, de la machine selon l'invention est autosuffisante.

Les figures 1, 3 et 5 représentent la machine agricole dans une première configuration et les figures 2, 4 et 6 représentent la machine agricole dans une deuxième configuration. Dans la première configuration, le chariot (6) est disposé entre les trains d'outils (4, 5). Dans la deuxième configuration le pulvériseur (1) est équipé d'un rouleau (16). Dans ce cas, le chariot (6) est disposé derrière les trains d'outils (4, 5) et le rouleau (16) est monté à l'arrière du châssis (2) derrière le chariot (6). Le pulvériseur représenté sur les figures comporte un châssis (2) composé d'une poutre centrale.

Dans le premier exemple de réalisation représenté sur les figures 1 à 6 en traits continus, la poutre centrale comporte une partie avant (13) et une partie arrière (14). La partie avant (13) supporte le train d'outils avant (4) et est relié au timon (3). La partie arrière (14) supporte le train d'outils arrière (5) et le chariot (6). La partie arrière (14) est reliée à la partie avant (13) par l'intermédiaire de moyens de fixation (17) tels que des boulons. La partie arrière (14) porte au voisinage d'une extrémité le chariot (6) et au voisinage de l'autre extrémité le train d'outils arrière (5). Dans la première configuration, le chariot (6) est disposé entre les trains d'outils (4, 5). Les trains d'outils (4, 5) destinés à venir en regard l'un de l'autre dans leur position de travail, s'étendent au transport dans le voisinage des roues (7). Le train d'outils avant (4) pivote vers l'avant lors du passage de la position de travail à la position de transport et le train d'outils arrière (5) pivote vers l'arrière.

Dans certaines conditions, le pulvériseur (1) est équipé d'un rouleau (16). Le mélange de terre réalisé par les trains d'outils (4, 5) est complété par un rappui du sol. L'utilisation du rouleau (16) permet de mieux répartir les résidus de récolte sur la surface, d'améliorer le contact entre les graines, la terre et l'humidité et de favoriser la germination des graines appelée aussi le faux semis. Lorsque l'utilisateur souhaite utiliser un rouleau (16) sur le pulvériseur (1), il modifiera la position du chariot (6) afin de conserver une machine équilibrée et stable. Pour passer de la première à la deuxième configuration, la partie arrière (14) est désolidarisée de la partie avant (13). Puis la partie arrière (14) est retournée par rapport à un plan vertical perpendiculaire au châssis (2) pour que le chariot (6) passe d'une position intermédiaire à une position arrière. Par le retournement de la partie arrière (14), les trains d'outils (5) passent d'un pivotement vers l'arrière à un pivotement vers l'avant autour de l'articulation latérale (8) respective. Grâce au pivotement vers l'avant des trains d'outils (4, 5), notamment des trains d'outils arrière (5), la longueur du châssis (2) n'est pas augmentée. Le rouleau (16) est alors monté à l'arrière du châssis (2). D'une manière avantageuse, les deux extrémités de la partie arrière (14) sont identiques, ce qui permet le retournement. La partie avant (13) présente une extrémité correspondante à l'arrière destinée à recevoir l'une des extrémités de la partie arrière (14). Dans l'exemple de réalisation représenté, chacune des extrémités de la partie arrière (14) présente une plaque soudée avec des trous pour les moyens de fixations (17).

Dans un second exemple de réalisation, la poutre centrale comporte en sus, des parties avant et arrière (13, 14), une partie mobile (15). La partie mobile (15) peut être liée à l'une ou à l'autre des extrémités de la partie arrière (14) à l'aide de moyens de fixation. La division entre la partie mobile (15) et la partie arrière (14) est représentée en traits discontinus sur les figures 1 à 6. La partie mobile (15) supporte le chariot (6). Ainsi, la partie arrière (14) ne supporte que le train d'outils arrière (5). Dans la première configuration avec la position intermédiaire du chariot (6), la partie mobile (15) est disposée entre la partie avant (13) et la partie arrière (14). Depuis cette première configuration pour passer à la deuxième configuration, la partie mobile (15) est désolidarisée de part et d'autre, la partie arrière ( 14) est alors reliée à la partie avant (13) puis la partie mobile (15) est solidarisée à la partie arrière (14). On remarque que la partie arrière (14) avec le train d'outils (5) ainsi que la partie mobile (15) portant le chariot (6) sont retournées par rapport au plan vertical perpendiculaire au châssis (2). De cette manière, le chariot (6) présente une position arrière sur le châssis (2) et à l'extrémité libre de la partie mobile (15) peut alors être monté le rouleau (16). Ce retournement des parties arrière et mobile (14, 15) n'augmente pas la longueur du châssis (2). L'augmentation de longueur du pulvériseur (1) équipé d'un rouleau (16) est limitée. Comme dans le premier exemple de réalisation, le train d'outils arrière (5) pivote vers l'avant lors du passage de la position de travail à la position de transport. D'une manière avantageuse, les deux extrémités de la partie arrière (14), les deux extrémités de la partie mobile (15) et l'extrémité arrière de la partie avant (13) sont identiques. Elles permettent un montage selon la première ou la deuxième configuration. A l'identique du premier exemple de réalisation, chaque extrémité présente une plaque soudée avec des trous pour les moyens de fixations (17). D'autres formes peuvent être prévues pour les extrémités avec des moyens de fixations (17) différents.

Les opérations décrites pour passer de la première à la deuxième configuration sont simplement inversées pour faire passer le chariot (6) d'une position à l'arrière des trains d'outils (4, 5) à une position intermédiaire disposée entre les trains d'outils (4, 5). Dans le premier et le second exemples de réalisation, la poutre centrale est composée d'au moins deux parties (13, 14 ; 13, 14, 15).

L'action du pulvériseur sera plus ou moins efficace, selon le type de rouleau utilisé. Le rouleau assure un certain nivellement qui facilite le passage des semoirs et favorise le placement à une certaine profondeur de la semence. Ainsi la position du chariot (6) sur le châssis (2) est conditionnée par l'utilisation ou la non-utilisation d'un rouleau (16). Ainsi, le chariot (6) aura une position intermédiaire lorsque le châssis (2) n'est pas équipé d'un rouleau (16). Le chariot (6) aura, au contraire, une position inversée c'est-à-dire une position arrière avec l'utilisation d'un rouleau (16) pour favoriser un report de charge vers l'essieu arrière du tracteur. Dans ces deux configurations, le pulvériseur (1) fournit un travail de bonne qualité car il n'y a pas de déséquilibre au travail. Le balourd au transport est également évité. L'essieu arrière du tracteur n'est pas déchargé et il n'y a pas une perte de capacité de traction pour le tracteur.

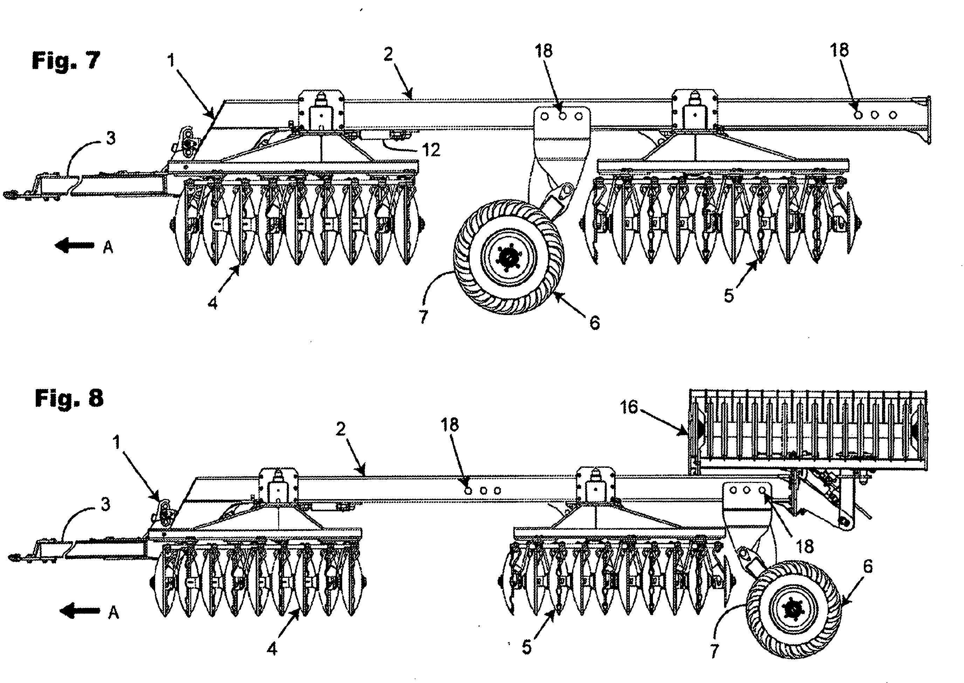

Dans un troisième exemple de réalisation représenté sur les figures 7 et 8, le pulvériseur (1) comporte un châssis (2) en une seule partie. Dans le cas d'une poutre centrale, celle-ci est constituée d'une seule partie. Cette poutre porte sensiblement à l'avant le train d'outils avant (4) et sensiblement à l'arrière le train d'outils arrière (5). Le chariot (6) est relié au châssis (2) ou à la poutre centrale au moyen de boulons. Le châssis (2) présente des points de fixations (18) répartis en deux groupes. Un groupe est disposé sensiblement entre les trains d'outils (4, 5) et l'autre sensiblement à l'arrière du train d'outils arrière (5). Grâce à ces deux groupes de points de fixation (18), le chariot (6) peut passer d'une position intermédiaire à une position arrière, et inversement. Pour ce troisième exemple de réalisation, le train d'outils arrière (5) pivote vers l'arrière lors du passage de la position de travail à la position de transport dans la première et également dans la deuxième configurations. De ce fait, le châssis (2) est rallongé par rapport au premier et au deuxième exemples de réalisation. D'une manière avantageuse, il y a au moins deux points de fixation (18) par groupe.

Il est envisageable de prévoir une rallonge pouvant être montée sur le châssis (2) pour passer de la première à la deuxième configuration. Avec l'utilisation d'une rallonge, la longueur totale du pulvériseur (1) selon la première configuration n'est pas augmentée. La rallonge est montée à l'arrière du châssis (2) pour recevoir le chariot (6) et le rouleau (16). Dans ce cas, le groupe de points de fixation (18) arrière est ménagé sur la rallonge.

Selon un autre exemple de réalisation non représenté, le châssis (2) est en une seule partie et comporte deux groupes de points de fixation (18) permettant au chariot (6) de passer d'une première à une deuxième configuration. Lors du passage de la première à la deuxième configuration, le train d'outils arrière (5) est retourné pour qu'il pivote vers l'avant lors du passage de la position de travail à la position de transport. Ce pivotement vers l'avant du train d'outils arrière (5) limite l'augmentation de longueur causée par l'ajout du rouleau (16).

La machine agricole selon les différents exemples de réalisation présente un châssis (2) avec un moyen pour passer d'une première configuration (fig. 1, 3, 5 et 7) à une deuxième configuration (fig. 2, 4, 6 et 8), et inversement. Ce moyen permettant d'obtenir une machine stable sans l'utilisation de masse supplémentaire est le déplacement du chariot (6) dans une position déterminée sur le châssis (2) selon la configuration.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

On notera que l'invention s'applique également à des pulvériseurs en V décalés asymétriques dont seuls les trains avant ou arrière sont décalés. Cette invention s'applique aussi bien aux pulvériseurs dont les trains d'outils sont orientés de manière à former sensiblement un "X" dans au moins une position de travail.

Selon un autre mode de réalisation, le châssis (2) est composé d'un cadre de préférence rectangulaire réalisé avec un assemblage de poutres.

## Revendications

1. Machine agricole (1) munie d'un châssis (2) comportant des trains d'outils (4, 5) et un chariot (6) équipé de roues (7), ***caractérisée en ce que*** ledit chariot (6) passe d'une position intermédiaire disposée entre lesdits trains d'outils (4, 5) correspondant à une première configuration de travail, à une position arrière disposée à l'arrière desdits trains d'outils (4, 5) correspondant à une deuxième configuration de travail compte tenu de la direction d'avance (A), et inversement.

2. Machine selon la revendication 1, ***caractérisée en ce* que** ledit châssis (2) est composé d'au moins deux parties, une partie avant (13) et une partie arrière (14).

3. Machine selon la revendication 2, ***caractérisée en ce* que** ladite partie arrière (14) supporte le chariot (6) et les trains d'outils arrière (5) et qu'un retournement de ladite partie arrière (14) par rapport à un plan vertical perpendiculaire audit châssis (2) permet audit chariot (6) de passer d'une position intermédiaire à une position arrière, et inversement.

4. Machine selon la revendication 2, ***caractérisée en ce* que** ledit châssis (2) est composé en sus d'une partie mobile (15) qui supporte ledit chariot (6) et qu'un déplacement de ladite partie mobile (15) d'une position intermédiaire entre ladite partie avant (13) et ladite partie arrière (14) vers une position à l'arrière de ladite partie arrière (14) permet audit chariot (6) de passer d'une position intermédiaire à une position arrière, et inversement.

5. Machine selon la revendication 1, ***caractérisée en ce* que** des points de fixation (18) sont ménagés sur ledit châssis (2) sensiblement entre lesdits trains d'outils (4, 5) et à l'arrière desdits trains d'outils (4, 5) et que ces points de fixation (18) permettent audit chariot (6) de passer d'une position intermédiaire à une position arrière, et inversement.

6. Machine selon l'une quelconque des revendications 1 à 5, ***caractérisée en ce* que** lorsqu'un rouleau (16) est monté à l'arrière dudit châssis (2), ledit chariot (6) passe d'une position intermédiaire à une position arrière.

7. Machine selon l'une quelconque des revendications 1 à 6, ***caractérisé en ce* que** lesdits trains d'outils (4, 5) pivotent vers l'avant lors du passage de la position de travail à la position de transport, lorsque ledit chariot (6) est en position arrière.

8. Machine selon la revendication 3, ***caractérisée en ce* qu'**un desdits trains d'outils (4, 5) est lié sensiblement à une extrémité de ladite partie arrière (14) et que ledit chariot (6) est lié sensiblement à l'autre extrémité de ladite partie arrière ( 14).

9. Machine selon l'une quelconque des revendications 1 à 8, ***caractérisée en ce* que** les trains d'outils (4, 5) sont orientés de manière à former sensiblement un "X" ou un "V" dans au moins une position de travail.

10. Machine selon l'une quelconque des revendications 1 à 9, ***caractérisée en ce* qu'**il s'agit d'une machine de déchaumage tel qu'un pulvériseur agricole et que les trains d'outils (4, 5) sont des batteries de disques.

## Claims

1. Agricultural machine (1) provided with a chassis (2) comprising sets of tools (4, 5) and a carriage (6) equipped with wheels (7), ***characterized in* that** the said carriage (6) passes from an intermediate position arranged between the said sets of tools (4, 5) corresponding to a first work configuration, to a rear position arranged at the rear of the said sets of tools (4, 5) corresponding to a second work configuration, taking into account the direction of advance (A), and vice versa.

2. Machine according to Claim 1, ***characterized in* that** the said chassis (2) is composed of at least two parts, a front part (13) and a rear part (14).

3. Machine according to Claim 2, ***characterized in* that** the said rear part (14) supports the carriage (6) and the rear sets of tools (5) and that a turning over of the said rear part (14) with respect to a vertical plane perpendicular to the said chassis (2) permits the said carriage (6) to pass from an intermediate position to a rear position, and vice versa.

4. Machine according to Claim 2, ***characterized in* that** the said chassis (2) is composed in addition of a mobile part (15) which supports the said carriage (6) and that a displacement of the said mobile part (15) from an intermediate position between the said front part (13) and the said rear part (14) towards a position at the rear of the said rear part (14) permits the said carriage (6) to pass from an intermediate position to a rear position, and vice versa.

5. Machine according to Claim 1, ***characterized in* that** fixing points (18) are arranged on the said chassis (2) substantially between the said sets of tools (4, 5) and at the rear of the said sets of tools (4, 5) and that these fixing points (18) permit the said carriage (6) to pass from an intermediate position to a rear position, and vice versa.

6. Machine according to any one of Claims 1 to 5, ***characterized in* that** when a roller (16) is mounted at the rear of the said chassis (2), the said carriage (6) passes from an intermediate position to a rear position.

7. Machine according to any one of Claims 1 to 6, ***characterized in* that** the said sets of tools (4, 5) pivot towards the front when passing from the work position to the transport position, when the said carriage (6) is in the rear position.

8. Machine according to Claim 3, ***characterized in* that** one of the said sets of tools (4, 5) is connected substantially to one end of the said rear part (14) and that the said carriage (6) is connected substantially to the other end of the said rear part (14).

9. Machine according to any one of Claims 1 to 8, ***characterized in* that** the sets of tools (4, 5) are oriented so as to form substantially an "X" or a "V" in at least one work position.

10. Machine according to any one of Claims 1 to 9, ***characterized in* that** it is a stubble-ploughing machine such as an agricultural disc harrow and that the sets of tools (4, 5) are sets of discs.

## Patentansprüche

1. Landwirtschaftliche Maschine (1), die mit einem Rahmen (2) versehen ist, der Werkzeugsätze (4, 5) und einen mit Rädern (7) versehenen Wagen (6) umfasst, ***dadurch gekennzeichnet,* dass** der Wagen (6) von einer Zwischenstellung zwischen den Werkzeugsätze (4, 5) entsprechend einer ersten Arbeitskonfiguration in eine hintere Stellung hinter den Werkzeugsätze (4, 5) entsprechend einer zweiten Arbeitskonfiguration bei Betrachtung der Vorschubrichtung (A) und umgekehrt übergeht.

2. Maschine nach Anspruch 1, ***dadurch gekennzeichnet,* dass** der Rahmen (2) aus mindestens zwei Teilen, einem vorderen Teil (13) und einem hinteren Teil (14), besteht.

3. Maschine nach Anspruch 2, ***dadurch gekennzeichnet,* dass** der hintere Teil (14) den Wagen (6) und die hinteren Werkzeugsätze (5) trägt, und dass es ein Wenden des hinteren Teils (14) in Bezug zu einer dem Rahmen (2) senkrechte Vertikalebene dem Wagen (6) gestattet, von einer Zwischenstellung in eine hintere Stellung und umgekehrt überzugehen.

4. Maschine nach Anspruch 2, ***dadurch gekennzeichnet,* dass** der Rahmen (2) zusätzlich aus einem mobilen Teil (15) besteht, der den Wagen (6) trägt, und dass es eine Verschiebung des mobilen Teils (15) von einer Zwischenstellung zwischen dem vorderen Teil (13) und dem hinteren Teil (14) in eine Stellung hinter dem hinteren Teil (14) dem Wagen (6) gestattet, von einer Zwischenstellung in eine hintere Stellung überzugehen und umgekehrt.

5. Maschine nach Anspruch 1, ***dadurch gekennzeichnet,* dass** Befestigungspunkte (18) auf dem Rahmen (2) im Wesentlichen zwischen den Werkzeugsätze (4, 5) und am hinteren Teil der Werkzeugsätze (4, 5) angeordnet sind, und dass es diese Befestigungspunkte (18) dem Wagen (6) gestatten, von einer Zwischenstellung in eine hintere Stellung überzugehen und umgekehrt.

6. Maschine nach irgend einem der Ansprüche 1 bis 5, ***dadurch gekennzeichnet,* dass**, wenn eine Walze (16) am hinteren Teil des Rahmens (2) montiert ist, der Wagen (6) von einer Zwischenstellung in eine hintere Stellung übergeht.

7. Maschine nach irgend einem der Ansprüche 1 bis 6, ***dadurch gekennzeichnet,* dass** die Werkzeugsätze (4, 5) beim Übergang von der Arbeitsstellung in die Transportstellung nach vorne schwenken, wenn sich der Wagen (6) in der hinteren Stellung befindet.

8. Maschine nach Anspruch 3, ***dadurch gekennzeichnet,* dass** einer der Werkzeugsätze (4, 5) im Wesentlichen mit einem der Enden des hinteren Teils (14) verbunden ist, und dass der Wagen (6) im Wesentlichen mit dem anderen Ende des hinteren Teils (14) verbunden ist.

9. Maschine nach irgend einem der Ansprüche 1 bis 8, ***dadurch gekennzeichnet,* dass** die Werkzeugsätze (4, 5) derart ausgerichtet sind, dass sie im Wesentlichen ein "X" oder ein "V" in mindestens einer Arbeitsstellung bilden.

10. Maschine nach irgend einem der Ansprüche 1 bis 9, ***dadurch gekennzeichnet,* dass** es sich um einen Schälpflug, wie eine landwirtschaftliche Scheibenegge, handelt, und dass die Werkzeugsätze (4, 5) Scheibengruppen sind.
